# EUROPEAN PATENT SPECIFICATION

(11) **EP 1 221 799 B1**
(45) Date of publication and mention of the grant of the patent: **07.01.2009**
(21) Application number: 02000304.2
(22) Date of filing: 03.01.2002
(51) Int. Cl.: H04M 1/57, H04M 1/2745, H04M 1/60, H04M 1/05, H04M 1/27

(54) **Portable telephone terminal**
Tragbares Telefonendgerät
Terminal téléphonique portable

(30) Priority: 05.01.2001 JP 2001000515
(43) Date of publication of application: 10.07.2002
(60) Divisional application: 08011268.3
(73) Proprietor: NEC CORPORATION, Tokyo (JP)
(72) Inventor: Kuramatsu, Hiroyasu, Minato-ku, Tokyo (JP)
(74) Representative: von Samson-Himmelstjerna, Friedrich

(56) References cited:
- WO-A-99/49681
- US-A- 5 978 689
- US-A- 5 991 637
- PATENT ABSTRACTS OF JAPAN vol. 2000, no. 07, 29 September 2000 (2000-09-29) & JP 2000 124983 A (NEC MOBILE COMMUN LTD), 28 April 2000 (2000-04-28)

## Description

### Technical Field of the Invention

The present invention relates to a portable telephone terminal, and more particularly, to a portable telephone terminal which outputs, from an earphone/microphone, voice representing a caller's telephone number or a caller's name when receiving a call.

### Description of the Related Art

There is a problem in that a user has his or her portable telephone terminal in a pocket, a bag or the like and accordingly misses a received call and a chance of taking the call. Even when confirming the call, the user must take out the portable telephone terminal from an item he or she has stowed the portable telephone terminal into such as a pocket or bag, and initiate the call.

To solve the problem above, an earphone/microphone for a portable telephone terminal has been proposed in Japanese Unexamined Patent Publication No. 2000-13485 (hereinafter referred to as the "First Conventional Example"). Also, an earphone/microphone with a switch as that described in Japanese Unexamined Patent Publication No. 2000-124983 has been proposed (hereinafter referred to as the "Second Conventional Example").

A portable telephone terminal equipped with a function of displaying a caller's telephone number in a displaying part upon receipt of a call and further displaying a caller's name as well in the displaying part if the name corresponding to this telephone number is registered in an address book of the portable telephone terminal, is generally and widely used. Inventions revealing an operation of informing regarding a caller's telephone number and name by circuit of voice to thereby allow a user to easily obtain the information in the manner described above include a portable telephone terminal described in Japanese Unexamined Patent Publication No. Hei-10-233833 (hereinafter referred to as the "Third Conventional Example"), a portable telephone terminal and a method for informing regarding a received call described in Japanese Unexamined Patent Publication No. Hei-11-32105 (hereinafter referred to as the "Fourth Conventional Example"), a voice accumulating apparatus, an information and communications apparatus and a method for reproducing a transmitted number described in Japanese Unexamined Patent Publication No. Hei-11-187113 (hereinafter referred to as the "Fifth Conventional Example"), etc.

The First Conventional Example describes an earphone/microphone for a portable telephone terminal which informs regarding a received call by circuit of light, sound, vibrations, etc.

The Second Conventional Example describes a portable telephone terminal which comprises an earphone/microphone with a switch and accordingly permits a user to execute operations such as control via voice recognition using an external microphone of the earphone/microphone and switching between operation modes in accordance with how long various switches remain depressed.

The Third Conventional Example describes a portable telephone terminal which displays a caller's telephone number upon receipt of a call, and further informs regarding a caller's name by voice from a speaker if the caller's name corresponding to this telephone number is registered in a memory of the portable telephone terminal.

The Fourth Conventional Example describes a portable telephone terminal which informs regarding a caller's telephone number or caller specifying information (e.g., caller's name) corresponding to the telephone number from vocalizing circuit as a ringing tone, and a method for informing regarding a received call for such a portable telephone terminal.

The Fifth Conventional Example describes a voice accumulating apparatus which stores received information upon receipt of a call, converts the stored information into voice information and outputs voice at any desired timing, an information and communications apparatus and a method for reproducing a transmitted number.

However, since information specifying a caller is not reported with voice while the sound informs a user of receipt of a call according to the First Conventional Example, the information outputted from the earphone/microphone alone does not make it possible to specify the caller before taking the call.

Although the Second Conventional Example allows operations such as control via voice recognition using the external microphone of the earphone/microphone and switching between the operation modes in accordance with how long the various switches remain depressed, since information specifying a caller is not reported as voice, the information outputted from the earphone/microphone alone does not make it possible to specify the caller before taking the call.

Although a caller's telephone number is displayed upon receipt of a call and a caller's name is further reported by voice from a speaker if the caller's name corresponding to this telephone number is registered in the memory of the portable telephone terminal according to the Third Conventional Example, if the portable telephone terminal is stowed in a pocket, a bag or another item, it takes some time to confirm the information regarding the caller after receiving the call. Hence, depending on where the portable telephone terminal is kept, it is difficult to confirm the information regarding the caller.

Although the Fourth Conventional Example requires the vocalizing circuit as a ringing tone to inform regarding a caller's telephone number and the corresponding caller's name at the time of receipt of a call, it takes some time to confirm the information regarding the caller after receiving the call if the portable telephone terminal is stowed in a pocket, a bag or another item. Hence, depending on where the portable telephone terminal is stowed, it is difficult to confirm the information regarding the caller.

Although the Fifth Conventional Example requires to store received information upon receipt of a call, convert the stored information into voice information and output voice at any desired timing, if the portable telephone terminal is stowed in a pocket, a bag or another item, it takes some time to confirm the information regarding the caller after receiving the call. Hence, depending on where the portable telephone terminal is stowed, it is difficult to confirm the information regarding the caller.

An invention combining the First and the Third Conventional Examples, an invention combining the First and the Fourth Conventional Examples and an invention combining the First and the Fifth Conventional Examples provide a portable telephone terminal which informs by an incoming call tone through an earphone/microphone upon receipt of a call and further informs regarding caller information by voice through a speaker of a main portable unit if the information corresponding to a caller's telephone number (e.g., caller's name) is registered in a memory. However, if a main portable unit is stowed in a pocket, a bag or another item, it is difficult to inform a user without fail of the caller's telephone number, the caller information, etc.

An invention combining the Second and the Third Conventional Examples, an invention combining the Second and the Fourth Conventional Examples and an invention combining the Second and the Fifth Conventional Examples provide a portable telephone terminal which informs by an incoming call tone through an earphone/microphone upon receipt of a call, further informs regarding caller information by voice through a speaker of a main portable unit if the information corresponding to a caller's telephone number (e.g., caller's name) is registered in a memory, and controls operations in accordance with how long an earphone/microswitch remains depressed. However, if a main portable unit is stowed in a pocket, a bag or another item, it is difficult to inform a user without fail of the caller's telephone number, the caller information, etc.

WO 99/49681 discloses a method and apparatus for performing handsfree operations and voicing with a CDMA telephone. Information indicating a caller, such as the caller's telephone number or name, are processed by means of a text-to-speech converter into respective speech information. The speech information is output via an internal speaker of the telephone or an external speaker connected to the telephone.

US 5,978,689 discloses a personal portable communication and audio system, wherein information indicating a caller (e.g. caller ID or caller's name) is outputted via an external speaker of the system as audible sound. This output is controlled by the system's user via switching operations.

US 5,991,637 discloses an integrated passive and active communications system, wherein information indicating a caller (e.g. caller's telephone number or name) is outputted via a speaker of the system by means of a speech synthesizer also as audible sound.

JP 2000 124983 discloses a portable terminal equipped with earphone microphone switch, wherein the portable terminal may be controlled via a switch of the earphone microphone such that sound recognition operation is initiated, a call is started and the like.

The object of the present invention is to provide a portable telephone terminal which informs regarding caller information through an earphone/microphone and which allows controlling operation even when the portable telephone terminal is stowed in a pocket, bag, or another item or while driving a car.

To solve this object, the present invention provides a portable telephone terminal according to claim 1. Preferred embodiments are defined in the dependent claims.

According to the present invention, a portable telephone terminal comprises: a main portable unit, an earphone-and-microphone unit, said earphone-and-microphone unit being connectable to said main portable unit, said earphone-and-microphone unit for outputting an information denoting a caller when a call is received, said main portable unit further comprising: connection monitoring circuit for monitoring whether said earphone-and-microphone unit is connected to said main portable unit; information output switching circuit for switching an information output to said earphone-and-microphone unit when said connection monitoring circuit determines that said earphone-and-microphone unit is connected to said main portable unit; informing circuit for informing regarding said voice information denoting said caller, said information being outputted as voice from said earphone-and-microphone unit when said information output switching circuit switches said information output to said earphone-and-microphone unit; display or displaying characters and visual information; and receiver or outputting voice information; wherein said information output switching circuit is for switching said information output to said display and said receiver hen said connection monitoring circuit determines that said earphone-and-microphone unit is not connected to said main portable unit to output said information denoting said caller; and an operation switching circuit for switching an operation based on an instruction, which is inputted by operating said earphone-and-microphone unit when said connection monitoring circuit determines that said earphone-and-microphone unit is connected and when said information output switching circuit switches said information output to said earphone and microphone unit; wherein said earphone-and-microphone unit comprises at least one switch and said operating switching circuit is for switching an operation in accordance with a predetermined instruction, which is inputted based on how long one or more than one of the at least one switch of said earphone-and-microphone unit remain depressed, said operating switching circuit for suppressing transition to an operation of informing regarding said information denoting said caller by said informing circuit and for time shifting an operation of taking the call when one or more of the at least one switch remains depressed for a predetermined period or longer; and wherein said operation switching circuit is for shifting the operation of taking the call until after said information denoting said caller is outputted, which informing operation is initiated by one or more of the at least one switch being depressed for a period shorter than the predetermined period or longer.

Thus, as the earphone/microphone connected to a main portable unit is operated, an operation is switched. Hence, even when the main portable unit is stowed in a bag or another item, it is possible to switch the operation of the portable telephone terminal.

Thus, the earphone/microphone is operated and the portable telephone terminal shifts the operation of taking the call when the operation of informing regarding the information denoting the caller is initiated. Therefore, even when the main portable unit is stowed in a bag or another item for example, it is possible to shift from the operation of taking the incoming call to the informing operation at any timing desired by a portable telephone terminal holder.

Thus, the earphone/microphone is operated upon receipt of the call, transition to the operation of informing regarding the information denoting the caller is suppressed, and the portable telephone terminal shifts the operation of taking the incoming call. Hence, when it is not particularly necessary to specify the caller, a period of time from suppression of the informing operation until the operation of taking the incoming call is shortened.

Thus, according to the sixteenth aspect of the present invention, an operation is switched in accordance with the predetermined instruction which is inputted based on how long one or more than one of the switches of the earphone/microphone remain depressed. Hence, even when it is difficult to confirm a display of a main portable unit, it is possible to easily switch the operation of the portable telephone terminal.

As the information denoting the caller is outputted from the earphone/microphone, even if it is difficult to confirm a display of a main portableunit such as when the main portable unit is stowed in a pocket, a bag or another item or while driving a car, it is possible to easily obtain the information denoting the caller without fail.

Whether the earphone/microphone is connected is judged, and when it is determined that the earphone/microphone is connected, the information denoting the caller is outputted from the earphone/microphone. Hence, even when it is difficult to confirm a display of a main portable unit, it is possible to easily obtain the information denoting the caller without fail.

Since the portable telephone terminal comprises the receiver and the display (e.g., display), it is possible to easily obtain various information from the receiver and the display.

When the connection monitoring circuit in the portable telephone terminal of the third aspect determines that the earphone/microphone is not connected, the information output switching circuit switches the information output to the display and the receiver.

Thus, the information output is switched to the display and the receiver when it is determined that the earphone/microphone is not connected, and therefore, even when the earphone/microphone is not connected, the information denoting the caller is obtained.

A further aspect of the present invention comprises: a data receiving circuit which receives upon receipt of a call caller data which is data unique to the caller transmitted from a terminal of the caller; and a registering circuit which registers the caller data and caller information which is information specifying the caller and which corresponds to the caller data.

Thus, as the caller data and the caller information are registered in advance, when the caller data is received upon receipt of the call and not only the caller data but the caller information as well corresponding to the caller data are reported, it is possible to easily specify the caller.

In a further aspect of the present invention, the caller data is data which represents a telephone number of the caller.

Thus, invention, as the caller data is the telephone number of the caller, it is easy to manage the caller data.

In a further aspect of the present invention, the caller information is information which represents the name of the caller.

Thus, as the caller information is the name of the caller, it is possible to easily specify the caller at the time of informing regarding the caller information.

In a further aspect of the present invention, when the caller data received by the data receiving circuit matches with the caller data registered through the registering circuit, the informing circuit informs regarding the caller information that corresponds.

Thus, when the received caller data matches with the registered caller data, the caller information corresponding to the registered caller data is reported. Hence, it is easy to specify the caller.

In a further aspect of the present invention, when the caller data received by the data receiving circuit fails to match with the caller data registered through the registering circuit, the informing circuit informs regarding the caller data received by the data receiving circuit.

Thus, when the received caller data fails to match with the registered caller data, the received caller data is reported. Hence, even when there is no caller data registered, it is possible to obtain the information denoting the caller.

In a further aspect of the present invention, the portable telephone terminal comprises a message registering circuit which registers a predetermined message.

Thus, as the predetermined message is registered, it is possible to inform regarding various messages in accordance with a condition.

In a further aspect of the present invention, when the caller data is not received upon receipt of the call, the predetermined message is outputted.

Thus, when the caller data is not received upon receipt of the call, the predetermined message registered in advance is outputted. Therefore, when it is difficult to specify the caller, it is possible to inform regarding this. portable telephone terminal further comprises an operation switching circuit which switches an operation based on a predetermined instruction which is inputted by operating the earphone/microphone when the connection monitoring circuit determines that the earphone/microphone is connected and when the information output switching circuit

In a further aspect of the present invention, the operation switching circuit operates the earphone/microphone upon receipt of the call and outputs the informing circuit as voice from the earphone/microphone.

Thus, as the earphone/microphone is operated and the information denoting the caller is reported, even when the main portable unit is stowed in a bag or another item for example, it is possible to shift from the operation of taking the incoming call to the informing operation at any timing desired by a portable telephone terminal holder.

In a further aspect of the present invention, the operation switching circuit recognizes voice information which is inputted through the earphone/microphone and switches an operation in accordance with a predetermined instruction which is inputted based on the recognized voice information.

Thus, voice information inputted through the earphone/microphone is recognized, and an operation is switched in accordance with the predetermined instruction which is inputted based on the recognized voice information. Hence, even when it is difficult to confirm a display of a main portable unit, it is possible to easily switch the operation of the portable telephone terminal.
Fig. 1 is a drawing of a structure of a portable telephone terminal according to a first preferred embodiment of the present invention;
Fig. 2 is a flow chart showing operations of the portable telephone terminal according to the first preferred embodiment of the present invention;
Fig. 3 is a flow chart showing operations of the portable telephone terminal according to the first preferred embodiment of the present invention; and
Fig. 4 is a flow chart showing operations of a portable telephone terminal according to a second preferred embodiment of the present invention.

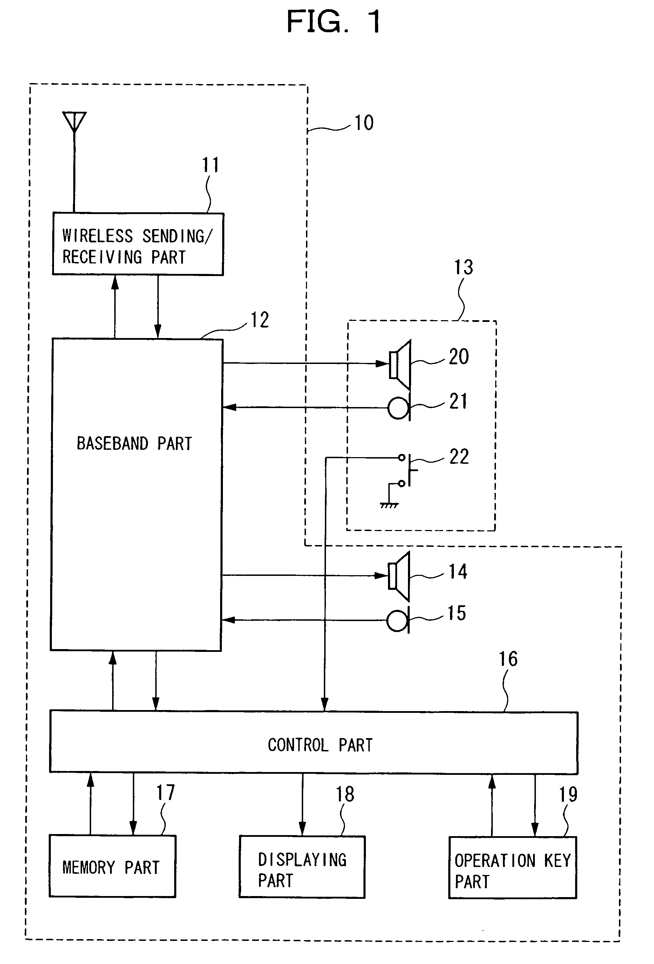

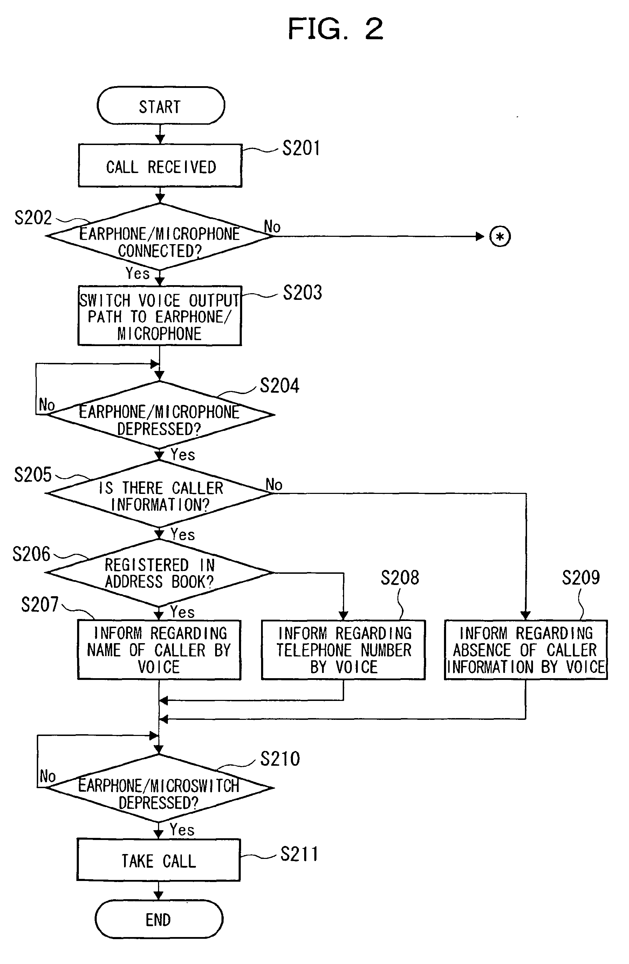

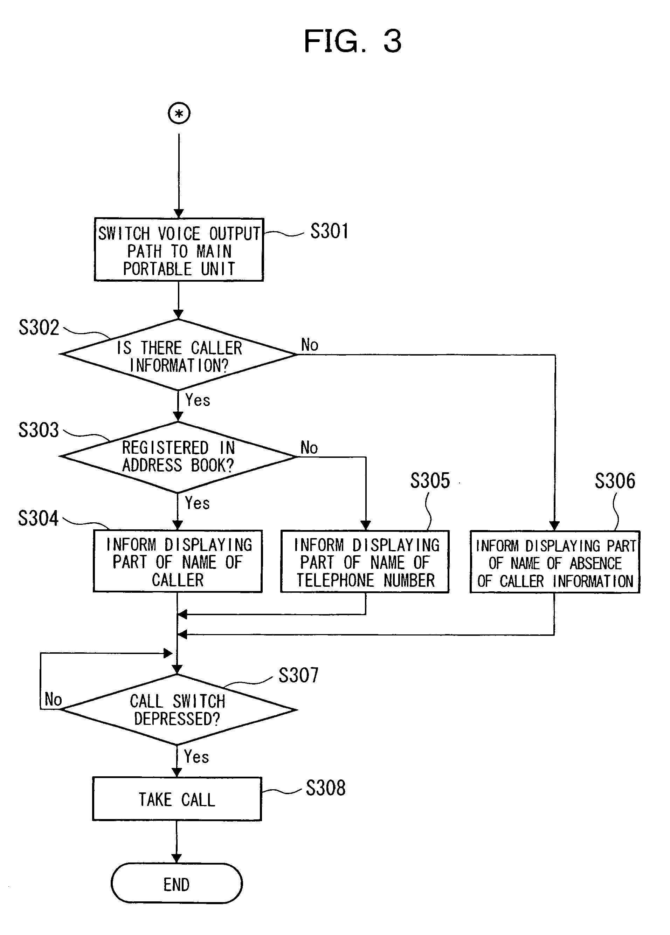

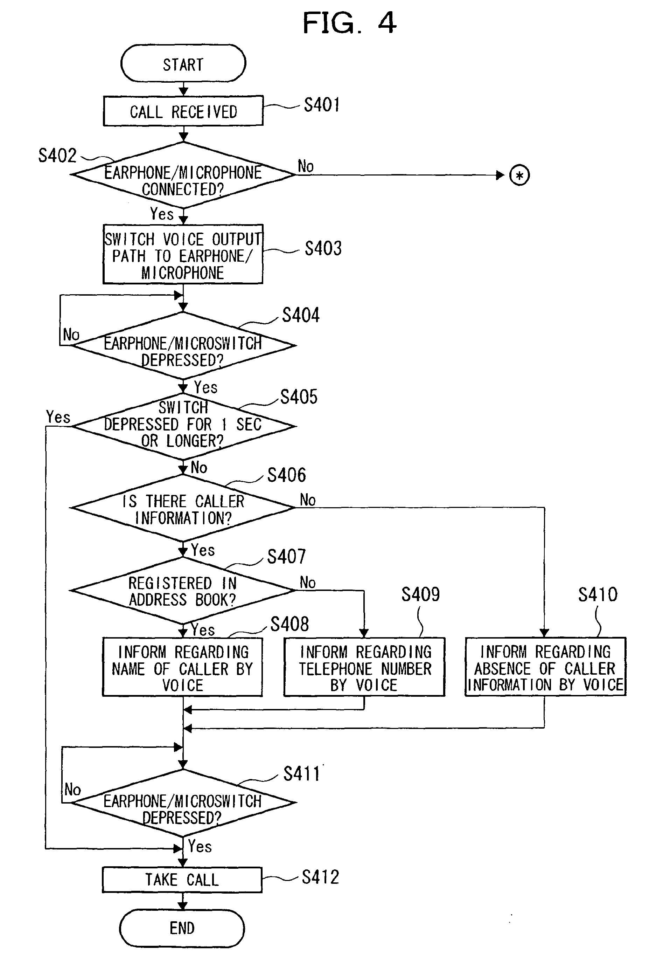

It is noted that the portable telephone terminal of Fig. 1 and operations described with reference to Figs. 3 and 4 form parts of the present invention, while the operations described with reference to Fig. 2 do not include operations according to the present invention where an operation is switched in accordance with a predetermined instruction inputted based on how long one or more switches of the earphone/microphone remain depressed.

Fig. 1 is a drawing of a structure of a portable telephone terminal according to a first preferred embodiment of the present invention. The structure of the portable telephone terminal according to the first preferred embodiment will now be described with reference to Fig. 1.

The portable telephone terminal comprises a main portable unit 10 and an earphone/microphone 13. The main portable unit 10 comprises a wireless sending/receiving part 11, a baseband part 12 which is connected with the earphone/microphone 13, a receiver 14, a microphone 15, a control part 16, a memory part 17, a displaying part 18 and an operation key part 19. The earphone/microphone 13 is equipped with an earphone 20, a microphone 21 and an earphone microswitch 22, and normally connected to the main portable unit 10 by one connector.

The wireless sending/receiving part 11 sends and receives a radio wave. The baseband part 12 converts various information into voice information. The earphone/microphone 13 communicates voice information to a portable telephone terminal holder through the earphone 20 and accepts voice information from the portable telephone terminal holder thorough the microphone 21. The receiver 14 outputs voice information. Voice information of voices uttered by the portable telephone terminal holder is supplied to the microphone 15. The control part 16 performs various controls in the portable telephone terminal. Various data are registered in the memory part 17, such as telephone numbers, names corresponding to the telephone numbers and a variety of messages. The displaying part 18 displays various information upon receipt of a call, such as a caller's telephone number and name. The operation key part 19 has various keys and allows the portable telephone terminal holder to enter various instructions.

The control part 16 has a connection monitoring circuit and an information output switching circuit in claim 2. The baseband part 12 has an information circuit in claim 2. Also, the baseband part 12 has an operating switching circuit in claim 12. The wireless sending/receiving part 11 has a data receiving circuit in claim 5. The memory part 17 has a registering circuit in claim 5.

Fig. 2 and Fig. 3 are flow charts showing operations of the portable telephone terminal according to the first preferred embodiment of the present invention. Operations upon receipt of a call performed by the portable telephone terminal according to the first preferred embodiment will now be described with reference to Fig. 1, Fig. 2 and Fig. 3.

When a call arrives at the portable telephone terminal (Step S201), the control part 16 monitors the condition of connection between the main portable unit 10 and the earphone/microphone 13 and determines whether the earphone/microphone 13 is connected to the main portable unit 10 (Step S202).

When it is determined that the earphone/microphone 13 is connected to the main portable unit 10 (Step S202/Yes), the control part 16 switches a voice output path to the earphone/microphone 13 (Step S203), and an incoming call tone is outputted from the earphone 20.

The control part 16 determines whether the earphone microswitch 22 has been depressed (Step S204). When determining that the earphone microswitch 22 has not been depressed (Step S204/No), the control part 16 determines once again whether the earphone microswitch 22 is depressed (Step S204).

When determining that the earphone microswitch 22 has been depressed (Step S204/Yes), the control part 16 determines whether an incoming signal contains caller data which is data unique to the caller such as a caller's telephone number (Step S205).

When determining that the caller data is not included in the incoming signal (Step S205/No), the control part 16 causes the baseband part 12 to vocalize a message, such as the one reading "There is no caller data," registered in the memory part 17 and output to the earphone 20 (Step S209).

After the message is outputted, the control part 16 determines whether the earphone microswitch 22 is depressed (Step S210). When determining that the earphone microswitch 22 is not depressed (Step S210/No), the control part 16 determines once again whether the earphone microswitch 22 is depressed (Step S210). When determining that the earphone microswitch 22 is depressed (Step S210/Yes), the control part 16 affirms the offhook state, shifts the operation of taking the call (Step S211) and finishes this operation.

When it is determined that the caller data is included in the incoming signal (Step S205/Yes), the control part 16 determines whether the caller data (caller's telephone number) are registered in an address book of the memory part 17 (Step S206). When it is determined that the caller data is not registered (Step S206/No), the caller's telephone number is vocalized by the baseband part 12 and then outputted to the earphone 20 (Step S208).

After outputting the telephone number, the control part 16 determines whether the earphone microswitch 22 is depressed (Step S210). When determining that the earphone microswitch 22 is not depressed (Step S210/No), the control part 16 determines once again whether the earphone microswitch 22 is depressed (Step S210). When determining that the earphone microswitch 22 is depressed (Step S210/Yes), the control part 16 affirms the offhook state, shifts the operation of taking the call (Step S211) and finishes this operation.

When it is determined that the caller data (caller's telephone number) are registered in the address book of the memory part 17 (Step S206/Yes), information specifying the caller such as the name corresponding to the caller's telephone number (caller information) is vocalized by the baseband part 12 and then outputted to the earphone 20 (Step S207).

After outputting the telephone number, the control part 16 determines whether the earphone microswitch 22 is depressed (Step S210). When determining that the earphone microswitch 22 is not depressed (Step S210/No), the control part 16 determines once again whether the earphone microswitch 22 is depressed (Step S210). When determining that the earphone microswitch 22 is depressed (Step S210/Yes), the control part 16 affirms the offhook state, shifts the operation of taking the call (Step S211) and finishes this operation.

While it has been heretofore common to confirm character information displayed by the displaying part 18 for confirmation of a caller's telephone number and name upon receipt of a call, according to the first preferred embodiment described above, a portable telephone terminal holder can confirm various information, such as a caller's telephone number and name, by voice without confirming the displaying part 18.

A description will now be given with reference to Fig. 3 on an operation of the portable telephone terminal upon receipt of a call in a case where it is determined the earphone/microphone 13 is not connected to the main portable unit 10 (Step S202/No), with reference to Fig. 1.

Determining that the earphone/microphone 13 is not connected to the main portable unit 10 (Step S202/No), the control part 16 switches the voice output path to the main portable unit 10 (Step S301). Through this switching, the incoming call tone is outputted from the receiver 14.

The control part 16 determines whether the caller data such as a caller's telephone number is included in the incoming signal (Step S302).

When determining that the caller data is not included in the incoming signal (Step S302/No), the control part 16 causes the displaying part 18 to display a message such as the one reading "There is no caller data." (Step S306)

After the message is displayed, the control part 16 determines whether a call switch of the operation key part 19 is depressed (Step S307). When determining that the call switch is not depressed (Step S307/No), the control part 16 determines once again whether the call switch is depressed (Step S307). When determining that the call switch is depressed (Step S307/Yes), the control part 16 affirms the offhook state, shifts the operation of taking the call (Step S308) and finishes this operation.

When determining that the caller data is included in the incoming signal (Step S302/Yes), the control part 16 determines whether the caller data (caller's telephone number) are registered in the address book of the memory part 17 (Step S303). When it is determined that the caller data is not registered (Step S303/No), the caller's telephone number is displayed by the displaying part 18 (Step S305).

After the caller data is displayed, the control part 16 determines whether the call switch of the operation key part 19 is depressed (Step S307). When determining that the call switch is not depressed (Step S307/No), the control part 16 determines once again whether the call switch is depressed (Step S307). When determining that the call switch is depressed (Step S307/Yes), the control part 16 affirms the offhook state, shifts the operation of taking the call (Step S308) and finishes this operation.

When it is determined that the caller data (caller's telephone number) is registered in the address book of the memory part 17 (Step S303/Yes), the caller information such as the name corresponding to the caller's telephone number is displayed by the displaying part 18 (Step S304).

After the caller information is displayed, the control part 16 determines whether the call switch of the operation key part 19 is depressed (Step S307). When determining that the call switch is not depressed (Step S307/No), the control part 16 determines once again whether the call switch is depressed (Step S307). When determining that the call switch is depressed (Step S307/Yes), the control part 16 affirms the offhook state, shifts the operation of taking the call (Step S308) and finishes this operation.

Next, there will be described a second preferred embodiment. A structure according to the second preferred embodiment of the present invention is similar to the structure according to the first preferred embodiment, and therefore, the second preferred embodiment may be understood as having a structure which is shown in Fig. 1.

Fig. 4 is a flow chart showing operations of a portable telephone terminal according to the second preferred embodiment of the present invention. Operations upon receipt of a call performed by the portable telephone terminal according to the second preferred embodiment will now be described with reference to Fig. 4 using Fig. 1.

When a call arrives at the portable telephone terminal (Step S401), the control part 16 monitors the condition of connection between the main portable unit 10 and the earphone/microphone 13 and determines whether the earphone/microphone 13 is connected to the main portable unit 10 (Step S402).

When it is determined that the earphone/microphone 13 is not connected to the main portable unit 10 (Step S402/No), operations are performed in accordance with the flow chart in Fig. 3 (Step S301 to Step S308) as in the first preferred embodiment.

When it is determined that the earphone/microphone 13 is connected to the main portable unit 10 (Step S402/Yes), the voice output path is switched to the earphone/microphone 13 (Step S403), and the incoming call tone is outputted from the earphone 20.

The control part 16 determines whether the earphone microswitch 22 has been depressed (Step S404). When determining that the earphone microswitch 22 has not been depressed (Step S404/No), the control part 16 determines once again whether the earphone microswitch 22 is depressed (Step S404).

When determining that the earphone microswitch 22 is depressed (Step S404/Yes), the control part 16 judges whether the earphone microswitch 22 remains pressed for a predetermined period or longer (one second or longer, for instance) (Step S405).

When determining that the earphone microswitch 22 remains depressed for the predetermined period or longer (Step S405/Yes), the control part 16 omits the operation of informing regarding the caller data and the caller information and shifts the operation of taking the call (Step S412), and finishes this operation.

When determining that the earphone microswitch 22 did not remain depressed for the predetermined period or longer (Step S405/No), the control part 16 determines whether the caller data such as a caller's telephone number is included in the incoming signal (Step S406).

When determining that the caller data is not included in the incoming signal (Step S406/No), the control part 16 causes the baseband part 12 to vocalize a message, such as the one reading "There is no caller data," registered in the memory part 17 and outputs to the earphone 20 (Step S410). After the message is outputted, the control part 16 determines whether the earphone microswitch 22 is depressed (Step S411). When determining that the earphone microswitch 22 is not depressed (Step S411/No), the control part 16 determines once again whether the earphone microswitch 22 is depressed (Step S411). When determining that the earphone microswitch 22 is depressed (Step S411/Yes), the control part 16 affirms the offhook state, shifts the operation of taking the call (Step S412) and finishes this operation.

When determining that the caller data is included in the incoming signal (Step S406/Yes), the control part 16 determines whether the caller data is registered in the address book of the memory part 17 (Step S407). When it is determined that the caller data is not registered (Step S407/No), the caller's telephone number is vocalized by the baseband part 12 and then outputted to the earphone 20 (Step S409).

After outputting the telephone number, the control part 16 determines whether the earphone microswitch 22 is depressed (Step S411). When determining that the earphone microswitch 22 is not depressed (Step S411/No), the control part 16 determines once again whether the earphone microswitch 22 is depressed (Step S411). When determining that the earphone microswitch 22 is depressed (Step S411/Yes), the control part 16 affirms the offhook state, shifts the operation of taking the call (Step S412) and finishes this operation.

When it is determined that the caller data is registered (Step S407/Yes), the caller information such as the name corresponding to the caller's telephone number is vocalized by the baseband part 12 and then outputted to the earphone 20 (Step S408).

After the caller information is outputted, the control part 16 determines whether the earphone microswitch 22 is depressed (Step S411). When determining that the earphone microswitch 22 is not depressed (Step S411/No), the control part 16 determines once again whether the earphone microswitch 22 is depressed (Step S411). When determining that the earphone microswitch 22 is depressed (Step S411/Yes), the control part 16 affirms the offhook state, shifts the operation of taking the call (Step S412) and finishes this operation.

While it has been heretofore common to confirm character information displayed by the displaying part 18 for confirmation of a caller's telephone number and name upon receipt of a call, according to the second preferred embodiment described above, as in the first preferred embodiment, a portable telephone terminal holder can confirm various information, such as a caller's telephone number and name, by voice without confirming the displaying part 18. Further, it is possible to omit the operation of informing regarding the caller data and the caller information depending on necessity and shift the operation of taking the call.

Although the second preferred embodiment requires to shift the operation of taking the call when the earphone microswitch 22 remains depressed for the predetermined period or longer after receipt of a call and to shift the operation of informing regarding the caller data and the caller information when the earphone microswitch 22 remains depressed for the predetermined period or shorter, the transition may be allowed when the earphone microswitch 22 remains depressed for the predetermined period or shorter.

In addition, while the transition to the operation of taking the call and the operation of informing regarding the caller data and the caller information is realized by pressing down the earphone microswitch 22, voice information may be entered into the microphone 21 of the earphone/microphone 13 using a voice recognition technology for the purpose of transition. For instance, a sound such as "Take a call." may be uttered and inputted for the transition. Alternatively, when this is to be realized with a simpler structure, the transition may be achieved in accordance with a sound volume level of a predetermined or higher level, or the transition may be achieved when a voice input is detected for a predetermined period or longer. The transition to the operation of taking the call may be realized through other operations.

The embodiments above are merely preferred examples of the present invention, and the present invention is not limited to these embodiments but may be modified for implementation without deviating from the gist of the invention.

As described above, as the information denoting the caller is outputted from said earphone/microphone, even if it is difficult to confirm a display of a main portable unit such as when the main portable unit is stowed in a pocket, a bag or another item or while driving a car, it is possible to easily obtain the information denoting the caller without fail.

According to the invention, whether said earphone/microphone is connected is judged, and when it is determined that said earphone/microphone is connected, the information denoting the caller is outputted from said earphone/microphone. Hence, even when it is difficult to confirm a display of a main portable unit, it is possible to easily obtain the information denoting the caller without fail.

Since the portable telephone terminal comprises the receiver and the display (e.g., display), it is possible to obtain various information from the receiver and the display.

Said information output is switched to said display and said receiver when it is determined that said earphone/microphone is not connected, and therefore, even when said earphone/microphone is not connected, the information denoting the caller is obtained.

As said caller data and said caller information are registered in advance, when the caller data is received upon receipt of the call and not only the caller data but the caller information as well corresponding to the caller data are reported, it is possible to easily specify the caller.

As said caller data is the telephone number of said caller, it is easy to manage said caller data.

As said caller information is the name of said caller, it is possible to easily specify the caller at the time of informing regarding said caller information.

When said received caller data matches with said registered caller data, said caller information corresponding to said registered caller data is reported. Hence, it is easy to specify the caller.

When said received caller data fails to match with said registered caller data, said received caller data is reported. Hence, even when there is no caller data registered, it is possible to obtain the information denoting the caller.

As the predetermined message is registered, it is possible to inform regarding various messages in accordance with a situation.

When said caller data is not received upon receipt of the call, said predetermined message registered in advance is outputted. Therefore, when it is difficult to specify the caller, it is possible to inform regarding this.

As said earphone/microphone connected to a main portable unit is operated, an operation is switched. Hence, even when the main portable unit is stowed in a bag or another item, it is possible to switch the operation of the portable telephone terminal.

As said earphone/microphone is operated and the information denoting the caller is reported, even when the main portable unit is stowed in a bag or another item for example, it is possible to shift from the operation of taking the incoming call to the informing operation at any timing desired by a portable telephone terminal holder.

Said earphone/microphone is operated and the portable telephone terminal shifts the operation of taking the call when the operation of informing regarding the information denoting the caller is initiated. Therefore, even when the main portable unit is stowed in a bag or another item for example, it is possible to shift from the operation of taking the incoming call to the informing operation at any timing desired by a portable telephone terminal holder.

Said earphone/microphone is operated upon receipt of the call, transition to the operation of informing regarding said information denoting said caller is suppressed, and the portable telephone terminal shifts the operation of taking the incoming call. Hence, when it is not particularly necessary to specify the caller, a period of time from suppression of the informing operation until the operation of taking the incoming call is shortened.

According to the invention, an operation is switched in accordance with the predetermined instruction which is inputted based on how long one or more than one of the switches of said earphone/microphone remain depressed. Hence, even when it is difficult to confirm a display of a main portable unit, it is possible to easily switch the operation of the portable telephone terminal.

According to the invention, voice information inputted through said earphone/microphone is recognized, and an operation is switched in accordance with the predetermined instruction which is inputted based on the recognized voice information. Hence, even when it is difficult to confirm a display of a main portable unit, it is possible to easily switch the operation of the portable telephone terminal.

## Claims

1. A portable telephone terminal comprising:
a main portable unit (10),
an earphone-and-microphone unit (13), said earphone-and-microphone unit (13) being connectable to said main portable unit (10), said earphone-and-microphone unit (13) for outputting an information denoting a caller when a call is received,
said main portable unit (10) further comprising:
connection monitoring circuit for monitoring whether said earphone-and-microphone unit (13) is connected to said main portable unit (10);
information output switching circuit for switching an information output to said barphone-and-microphone unit (13) when said connection monitoring circuit determines that said earphone-and-microphone unit (13) is connected to said main portable unit (10);
informing circuit for informing regarding said voice information denoting said caller, said information being outputted as voice from said earphone-and-microphone unit (13) when said information output switching circuit switches said information output to said earphone-and-microphone unit (13);
display (18) for displaying characters and visual information; and
receiver (14) for outputting voice information;
wherein said information output switching circuit is for switching said information output to said display (18) and said receiver (14) when said connection monitoring circuit determines that said earphone-and-microphone unit (13) is not connected to said main portable unit (10) to output said information denoting said caller; and
an operation switching circuit for switching an operation based on an instruction, which is inputted by operating said earphone-and-microphone unit (13) when said connection monitoring circuit determines (10) that said earphone-and-microphone unit (13) is connected and when said information output switching circuit switches said information output to said earphone and microphone unit (13);
wherein said earphone-and-microphone unit (13) comprises at least one switch (22) and said operating switching circuit is for switching an operation in accordance with a predetermined instruction, which is inputted based on how long one or more than one of the at least one switch (22) of said earphone-and-microphone unit (13) remain depressed, said operating switching circuit for suppressing transition to an operation of informing regarding said information denoting said caller by said informing circuit and for time shifting an operation of taking the call when one or more of the at least one switch (22) remains depressed for a predetermined period or longer; and
wherein said operation switching circuit is for shifting the operation of taking the call until after said information denoting said caller is outputted, which informing operation is initiated by one or more of the at least one switch (22) being depressed for a period shorter than the predetermined period.

2. The portable telephone terminal according to claim 1 further comprising:
data receiving circuit (11) for receiving upon receipt of a call caller data, which is data unique to said caller transmitted from a terminal of said caller; and
a registering circuit (17) for registering said caller data and caller information, which is information specifying said caller and which corresponds to said caller data.

3. The portable telephone terminal according to claim 2, wherein said caller data is data which represents a telephone number of said caller.

4. The portable telephone terminal according to claim 2 or 3, wherein said caller information is information which represents the name of said caller.

5. The portable telephone terminal according to any one of claims 1 to 4, wherein, when said caller data received by said data receiving circuit matches with said caller data registered through said registering circuit, said informing circuit informs regarding said caller information that corresponds.

6. The portable telephone terminal according to any one of claim 1 to 5, wherein, when said caller data received by said data receiving circuit fails to match with said caller data registered through said registering circuit, said informing circuit informs regarding said caller data received by said data receiving circuit.

7. The portable telephone terminal according to any one of claims 1 to 6, wherein said portable telephone terminal comprises message registering circuit (17) for registering a predetermined message.

8. The portable telephone terminal according to claim 7, wherein, when said caller data is not received upon receipt of the call, said predetermined message is outputted.

9. The portable telephone terminal according to any of the claims 1 to 8, wherein said operation switching circuit is for operating said earphone-and-microphone unit (13) upon receipt of the call and for outputting said information denoting said caller from said earphone-and-microphone unit (13).

10. The portable telephone terminal according to any one of claim 1 to 9, wherein said operation switching circuit is for recognizing voice information which is inputted through said earphone-and-microphone unit (13) and for switching an operation in accordance with a predetermined instruction, which is inputted based on the recognized voice information.

## Patentansprüche

1. Tragbares Telefonendgerät, umfassend:
eine tragbare Haupteinheit (10),
eine Kopfhörer- und Mikrofon-Einheit (13), wobei die Kopfhörer- und Mikrofon-Einheit (13) mit der tragbaren Haupteinheit (10) verbindbar ist, wobei die Kopfhörer- und Mikrofon-Einheit (13) zum Ausgeben von Information dient, die einen Anrufer bezeichnet, wenn ein Anruf empfangen wird,
wobei die tragbare Haupteinheit (10) ferner umfasst:
einen Verbindungsüberwachungsschaltkreis zum Überwachen, ob die Kopfhörer- und Mikrofon-Einheit (13) mit der tragbaren Haupteinheit (10) verbunden ist;
einen Informationsausgabeschaltkreis, um einen Informationsausgang auf die Kopfhörer- und Mikrofon-Einheit (13) zu schalten, wenn der Verbindungsüberwachungsschaltkreis feststellt, dass die Kopfhörer- und Mikrofon-Einheit (13) mit der tragbaren Haupteinheit (10) verbunden ist;
einen Informationsschaltkreis, um hinsichtlich der den Anrufer bezeichnenden Sprachinformation zu informieren, wobei die Information als Sprache von der Kopfhörer- und Mikrofon-Einheit (13) ausgegeben wird, wenn der Informationsausgabeschaltkreis den Informationsausgang auf die Kopfhörer- und Mikrofon-Einheit (13) schaltet;
eine Anzeige (18) zum Anzeigen von Schriftzeichen und visueller Information; und
einen Empfänger (14) zum Ausgeben von Sprachinformation;
wobei der Informationsausgabeschaltkreis dazu dient, die Informationsausgabe auf die Anzeige (18) und den Empfänger (14) zu schalten, wenn der Verbindungsüberwachungsschaltkreis feststellt, dass die Kopfhörer- und Mikrofon-Einheit (13) nicht mit der tragbaren Haupteinheit (10) verbunden ist, um die den Anrufer bezeichnende Information auszugeben; und
einen Betriebsartwechselschaltkreis zum Wechseln einer Betriebsart auf der Grundlage einer Anweisung, die beim Betreiben der Kopfhörer- und Mikrofon-Einheit (13) eingegeben wird, wenn der Verbindungsüberwachungsschaltkreis feststellt, dass die Kopfhörer- und Mikrofon-Einheit (13) angeschlossen ist, und wenn der Informationsausgabeschaltkreis den Informationsausgang auf die Kopfhörer- und Mikrofon-Einheit (13) schaltet;
wobei die Kopfhörer- und Mikrofon-Einheit (13) wenigstens einen Schalter (22) umfasst und der Betriebsartwechselschaltkreis dazu dient, eine Betriebsart gemäß einer vorbestimmten Anweisung zu wechseln, die basierend darauf eingegeben wird, wie lange einer oder mehr als einer des wenigstens einen Schalters (22) der Kopfhörer- und Mikrofon-Einheit (13) gedrückt bleibt, wobei der Betriebsartwechselschaltkreis dazu dient, einen Übergang in eine Betriebsart, um hinsichtlich der den Anrufer bezeichnenden Information mittels des Informationsschaltkreises zu informieren, zu unterdrücken und eine Betriebsart, den Anruf anzunehmen, zeitlich zu verschieben, wenn einer oder mehrere des wenigstens einen Schalters (22) für eine vorbestimmte Zeitdauer oder länger gedrückt bleiben; und
wobei der Betriebsartwechselschaltkreis dazu dient, die Betriebsart, den Anruf anzunehmen, zu verschieben, bis nach dem die den Anrufer bezeichnende Information ausgegeben ist, wobei dieser Informationsvorgang von einem oder mehreren des wenigstens einen Schalters (22) eingeleitet wird, der für eine Zeitdauer kürzer als die vorbestimmte Zeitdauer gedrückt wird.

2. Tragbares Telefonendgerät nach Anspruch 1, ferner umfassend:
einen Datenempfangsschaltkreis (11), um beim Empfang eines Anrufs von einem Endgerät des Anrufers übertragene Anruferdaten zu empfangen, welche für den Anrufer eindeutige Daten sind; und
einen Aufzeichnungsschaltkreis (17) zum Aufzeichnen der Anruferdaten und Anruferinformation, welche Information ist, die den Anrufer spezifiziert und die den Anruferdaten entspricht.

3. Tragbares Telefonendgerät nach Anspruch 2, wobei die Anruferdaten Daten sind, die eine Telefonnummer des Anrufers angeben.

4. Tragbares Telefonendgerät nach Anspruch 2 oder 3, wobei die Anruferinformation Information ist, die den Namen des Anrufers angibt.

5. Tragbares Telefonendgerät nach einem der Ansprüche 1 bis 4, wobei, wenn die von dem Datenempfangsschaltkreis empfangenen Anruferdaten mit den mittels Aufzeichnungskreises registrierten Anruferdaten übereinstimmen, der Informationsschaltkreis hinsichtlich der Anruferinformation, die übereinstimmt, informiert.

6. Tragbares Telefonendgerät nach einem der Ansprüche 1 bis 5, wobei, wenn die von dem Datenempfangsschaltkreis empfangenen Anruferdaten nicht mit den mittels des Aufzeichnungskreises registrierten Anruferdaten übereinstimmen, der Informationsschaltkreis hinsichtlich der von dem Datenempfangsschaltkreis empfangenen Anruferdaten informiert.

7. Tragbares Telefonendgerät nach einem der Ansprüche 1 bis 6, wobei das tragbare Telefonendgerät einen Nachrichtenaufzeichnungsschaltkreis (17) zum Aufzeichnen einer vorbestimmten Nachricht umfasst.

8. Tragbares Telefonendgerät nach Anspruch 7, wobei, wenn die Anruferdaten beim Empfang des Anrufs nicht empfangen werden, die vorbestimmte Nachricht ausgegeben wird.

9. Tragbares Telefonendgerät nach einem der Ansprüche 1 bis 8, wobei der Betriebswechselschaltkreis dazu dient, die Kopfhörer- und Mikrofon-Einheit (13) beim Empfang des Anrufs zu betreiben und die den Anrufer bezeichnende Information von der Kopfhörer- und Mikrofon-Einheit (13) auszugeben.

10. Tragbares Telefonendgerät nach einem der Ansprüche 1 bis 8, wobei der Betriebswechselschaltkreis dazu dient, Sprachinformation zu erkennen, die über die Kopfhörer- und Mikrofon-Einheit (13) eingegeben wird, und eine Betriebsart gemäß einer vorbestimmten Anweisung, die auf der Grundlage der erkannten Sprachinformation eingegeben wird, zu wechseln.

## Revendications

1. Terminal de téléphone portable comprenant :
une unité portable principale (10),
une unité d'écouteur et de microphone (13), ladite unité d'écouteur et de microphone (13) pouvant être connectée à ladite unité portable principale (10), ladite unité d'écouteur et de microphone (13) servant à délivrer des informations désignant un appelant lorsqu'un appel est reçu,
ladite unité portable principale (10) comprenant en outre :
un circuit de surveillance de connexion pour surveiller si ladite unité d'écouteur et de microphone (13) est connectée à ladite unité portable principale (10) ;
un circuit de commutation de sortie d'informations pour commuter une sortie d'informations vers ladite unité d'écouteur et de microphone (13) lorsque ledit circuit de surveillance de connexion détermine que ladite unité d'écouteur et de microphone (13) est connectée à ladite unité portable principale (10) ;
un circuit d'information pour informer desdites informations vocales désignant ledit appelant, lesdites informations étant délivrées en tant que voix par ladite unité d'écouteur et de microphone (13) lorsque ledit circuit de commutation de sortie d'informations commute ladite sortie d'informations vers ladite unité d'écouteur et de microphone (13) ;
un afficheur (18) pour afficher des caractères et des informations visuelles ; et
un récepteur (14) pour délivrer des informations vocales ;
dans lequel ledit circuit de commutation de sortie d'informations sert à commuter ladite sortie d'informations vers ledit afficheur (18) et ledit récepteur (14) lorsque ledit circuit de surveillance de connexion détermine que ladite unité d'écouteur et de microphone (13) n'est pas connectée à ladite unité portable principale (10) pour délivrer lesdites informations désignant ledit appelant ; et
un circuit de commutation d'opération pour commuter une opération sur la base d'une instruction, qui est entrée par la mise en oeuvre de ladite unité d'écouteur et de microphone (13) lorsque ledit circuit de surveillance de connexion détermine (10) que ladite unité d'écouteur et de microphone (13) est connectée et lorsque ledit circuit de commutation de sortie d'informations commute ladite sortie d'informations vers ladite unité d'écouteur et de microphone (13) ;
dans lequel ladite unité d'écouteur et de microphone (13) comprend au moins un commutateur (22) et ledit circuit de commutation d'opération sert à commuter une opération conformément à une instruction prédéterminée, qui est entrée sur la base du temps pendant lequel un ou plusieurs dudit au moins un commutateur (22) de ladite unité d'écouteur et de microphone (13) restent enfoncés, ledit circuit de commutation d'opération sert à supprimer une transition vers une opération d'information desdites informations désignant ledit appelant par ledit circuit d'information et sert à décaler dans le temps une opération de prise de l'appel lorsqu'un ou plusieurs dudit au moins un commutateur (22) reste enfoncé pendant une période prédéterminée ou plus longtemps ; et
dans lequel ledit circuit de commutation d'opération sert à décaler l'opération de prise de l'appel jusqu'à ce que lesdites informations désignant ledit appelant aient été délivrées, laquelle opération d'information est lancée par l'enfoncement d'un ou de plusieurs dudit au moins un commutateur (22) pendant une période plus courte que la période prédéterminée.

2. Terminal de téléphone portable selon la revendication 1, comprenant en outre :
un circuit de réception de données (11) pour recevoir, lors de la réception d'un appel, des données d'appelant, qui sont des données propres audit appelant transmises à partir d'un terminal dudit appelant ; et
un circuit d'enregistrement (17) pour enregistrer lesdites données d'appelant et des informations d'appelant, qui sont des informations spécifiant ledit appelant et qui correspondent auxdites données d'appelant.

3. Terminal de téléphone portable selon la revendication 2, dans lequel lesdites données d'appelant sont des données qui représentent un numéro de téléphone dudit appelant.

4. Terminal de téléphone portable selon la revendication 2 ou 3, dans lequel lesdites informations d'appelant sont des informations qui représentent le nom dudit appelant.

5. Terminal de téléphone portable selon l'une quelconque des revendications 1 à 4, dans lequel, lorsque lesdites données d'appelant reçues par ledit circuit de réception de données correspondent auxdites données d'appelant enregistrées par l'intermédiaire dudit circuit d'enregistrement, ledit circuit d'information informe desdites informations d'appelant qui correspondent.

6. Terminal de téléphone portable selon l'une quelconque des revendications 1 à 5, dans lequel, lorsque lesdites données d'appelant reçues par ledit circuit de réception de données ne correspondent pas auxdites données d'appelant enregistrées par l'intermédiaire dudit circuit d'enregistrement, ledit circuit d'information informe desdites données d'appelant reçues par ledit circuit de réception de données.

7. Terminal de téléphone portable selon l'une quelconque des revendications 1 à 6, dans lequel ledit terminal de téléphone portable comprend un circuit d'enregistrement de message (17) pour enregistrer un message prédéterminé.

8. Terminal de téléphone portable selon la revendication 7, dans lequel, lorsque lesdites données d'appelant ne sont pas reçues lors de la réception de l'appel, ledit message prédéterminé est délivré.

9. Terminal de téléphone portable selon l'une quelconque des revendications 1 à 8, dans lequel ledit circuit de commutation d'opération sert à mettre en oeuvre ladite unité d'écouteur et de microphone (13) lors de la réception de l'appel et sert à délivrer lesdites informations désignant ledit appelant à partir de ladite unité d'écouteur et de microphone (13).

10. Terminal de téléphone portable selon l'une quelconque des revendications 1 à 9, dans lequel ledit circuit de commutation d'opération sert à reconnaître des informations vocales qui sont entrées par l'intermédiaire de ladite unité d'écouteur et de microphone (13) et à commuter une opération conformément à une instruction prédéterminée, qui est entrée sur la base des informations vocales reconnues.
